# EUROPEAN PATENT SPECIFICATION

(11) **EP 1 080 778 B1**
(45) Date of publication and mention of the grant of the patent: **23.07.2003**
(21) Application number: 99202829.0
(22) Date of filing: 31.08.1999
(51) Int. Cl.: B01J 8/04, B01J 8/00, B01J 21/18, B01J 23/26

(54) **Method for modernization of a heterogeneous synthesis reactor**
Verfahren zur in-situ Modernisierung eines heterogenen Synthesereaktors
Procédé de modernisation in-situ d'un réacteur pour des synthèses hétérogènes

(43) Date of publication of application: 07.03.2001
(73) Proprietor: AMMONIA CASALE S.A., CH-6900 Lugano-Besso (CH)
(72) Inventor: Pagani, Giorgio, 6900 Lugano (CH); Filippi, Ermanno, 6900 Castagnola (CH)
(74) Representative: Zardi, Marco

(56) References cited:
- EP-A- 0 931 586
- GB-A- 1 356 151
- US-A- 4 180 543
- US-A- 4 755 362

## Description

### Field of application

The present invention relates to a method for modernization of a heterogeneous exothermic synthesis reactor including an external shell comprising a plurality of catalytic beds superimposed in a reciprocal spaced relation.

More in particular, the invention refers to a method for modernising a reactor of the full-opening type, comprising the preliminary step of:
- providing at least a first catalytic bed in an upper portion of said shell;
said at least first bed being loaded with a first catalyst having predetermined activity.

In the following description and in the subsequent claims, by the term: "modernization", it is intended to mean the modification of a pre-existing reactor for the purpose of improving its performance so as to obtain, for example, a production capacity and/or a conversion yield comparable to those of a newly manufactured reactor.

In the terminology of the field, this type of modernization is also referred to with the terms of: retrofitting or revamping.

In the following description and in the subsequent claims, by the term: "upper portion of the shell", it is intended to mean the space inside the shell defined in its upper portion. More in particular, the upper portion generally takes up about 20-50% of the inner space of the shell. On the contrary, the remaining 50-80% of the inner space of the shell defined in its lower portion is referred to as "lower portion".

Furthermore, in the field, by the term: "full-opening reactor", it is usually intended to mean a reactor comprising an external shell which is closed on the top by a closing cover, the diameter of which substantially corresponds to the diameter of the shell.

According to a further aspect thereof, the present invention also refers to a reactor as well as to a process for carrying out exothermic heterogeneous syntheses.

As already known, in the field of exothermic heterogeneous syntheses and, more in particular, in the production of ammonia and methanol, it is important to meet a twofold requirement, that is, on the one hand to increase the production capacity of the pre-existing synthesis reactors, and on the other hand, to have an improvement in the conversion yield and a reduction of energy consumption.

### Prior Art.

For the purpose of meeting the above requirement, the so-called technique of modernization of pre-existing reactors is increasingly asserting in the field, as it aims at avoiding an expensive replacement of the latter achieving, at the same time, the maximum conversion yield and the minimum energy consumption compatibly with the reaction space available.

For this purpose, the patent application EP-A-0 931 586 describes a method of modernisation which is based on the replacement of the catalytic bed or beds of the pre-existing reactor with new beds, preferably of the radial or axial-radial type. In particular, said method is based on the provision of a lowermost catalytic bed into the shell, having a small reaction volume, which is loaded with a particular catalyst having a high reaction activity, for example a catalyst based on a graphite-supported ruthenium.

Although the above method of modernisation is advantageous, in some respects, for the so-called Kellogg-type reactors or bottleneck reactors, it is not adapted to be carried out in all those pre-existing reactors for the exothermic heterogeneous synthesis of the full-opening type.

In particular, in the full-opening reactors, the above method does not allow the use of relatively large quantities of high-activity catalyst, thus limiting the conversion yield and the increase in the capacity that is achievable through the modernisation of an existing reactor.

In fact, in this case, the method does not allow an optimum utilisation with a high-activity catalyst of the reaction space in the lower portion of the reactor, where the conversion reaction is usually more difficult.

This is due to the fact that the structure and the dimensions of the catalytic beds in full-opening reactors - which usually have a height/diameter ratio higher than 8 (unlike the bottleneck reactors, where said ratio is of about 4) - are not suited to be loaded with a catalyst having a high reaction activity, thus requiring the use of a conventional low-activity catalyst.

In this respect, it must be noted that, unlike the traditional catalysts, the catalysts having a high reaction activity, for example of the ruthenium-based type, are light and usually have a particularly fragile structure, not very resistant to mechanical stresses.

Therefore, high-activity catalysts tend to break, thus losing their effectiveness, if they are subject to the crushing forces generated by the catalytic mass inside the above-mentioned beds. These forces are due to the temperature variations of the reactant gases as well as a consequence of the heating and cooling cycles to which said beds are subject. This phenomenon is particularly evident in the catalytic bed or beds located in the lower area of full-opening reactors.

It follows that the methods for modernizing existing heterogeneous exothermic synthesis reactors according to the prior art have not allowed so far to exploit at the best the potentialities of catalysts with high reaction activity in full-opening reactors, despite the need to increase the conversion yield and the capacity of these reactors is increasingly felt in the field.

### Summary of the invention

The problem underlying the present invention is that of providing a method for modernizing a heterogeneous exothermic synthesis reactor, that allows to sensibly increase the conversion yield and the capacity with respect to what is achievable with the methods of modernisation according to the prior art, with low operating costs and low energy consumption.

The above problem is solved thanks to a method of the type mentioned before, which is characterised in that it comprises the following steps:
- providing a plurality of catalytic beds in a lower portion of the shell, arranged in parallel with one another;
- loading the catalytic beds in the lower portion of the shell with a second catalyst having a greater activity than that of the first catalyst loaded in said at least first bed.

Advantageously, the method according to the present invention allows obtaining a considerably more efficient reactor in terms of conversion yield and thus, an increase in the production capacity, thanks to the loading of a high-activity catalyst in the entire lower portion of the same. The external structure of the reactor remaining unaltered.

This is made possible thanks to the provision of a plurality of catalytic beds arranged in parallel with one another in the lower portion of the reactor.

In this way, it is advantageously possible to exploit the reaction space defined inside the lower portion of the reactor at the best, by dividing it into several beds having such dimensions so as to be adapted to house a high-activity catalyst without damaging it. All that to the full advantage of the conversion yield and of the production capacity of the existing reactor.

Advantageously, the catalytic beds in the lower portion of the shell are arranged in parallel so as to be operatively comparable to a single large bed, for example of the type present in the reactors to be modernised, but having a higher reaction activity and a much lower load on the catalyst.

Furthermore, using high-activity catalyst into the entire lower portion of the reactor allows operating at lower temperatures in said portion compared to conventional ones, thus saving also in the operating costs and in the energy consumption with respect to the above-mentioned methods of the prior art.

Preferably, the catalytic beds in the lower portion of the shell are loaded with a catalyst based on graphite-supported ruthenium, since this type of catalyst has a high reaction activity and, at the same time, a long operating life. In fact, this catalyst is not prone to wear and has an excellent resistance to the temperature and pressure operating conditions present inside the reactor.

In addition, according to a particular and advantageous embodiment of the present method of modernization, five catalytic beds are provided. A first and a second catalytic bed in the upper portion of the shell, and a third, a fourth and a fifth catalytic bed arranged in parallel with one another in the lower portion of the shell, respectively.

In this way, both the kinetic configuration of the reactor and the use of the reaction volumes available are improved.

By the expression: "reaction volume", it is intended to mean the volume of a catalytic bed occupied by the catalyst and therefore, the space inside the bed where the synthesis reaction actually occurs.

According to a further aspect of the invention, a process for carrying out high-yield exothermic heterogeneous syntheses is also provided, of the type comprising the steps of:
- feeding gaseous reactants to a synthesis reactor comprising a shell supporting a plurality of superimposed catalytic beds in a reciprocal spaced relation;
- reacting said gaseous reactants into said catalytic beds;
which is characterised in that it further comprises the steps of:
- feeding a reaction mixture from at least one first catalytic bed extended into an upper portion of said shell to a plurality of catalytic beds arranged in parallel with one another into a lower portion of the shell;
- flowing said reaction mixture into said catalytic beds in the lower portion of the shell through a catalyst having a greater activity of reaction with respect to the activity of the catalyst loaded in said at least first catalytic bed;
- discharging from the synthesis reactor the reaction products leaving said catalytic beds in the lower portion of the shell.

The features and the advantages of the present invention will become clear from the following indicative and nonlimiting description of an embodiment of the invention, made with reference to the attached drawings.

### Brief description of the drawings

In such drawings:
- Figure 1 shows a view in longitudinal section of a full-opening reactor for carrying out exothermic heterogeneous syntheses according to the prior art;
- Figure 2 shows a view in longitudinal section of a reactor obtained by modifying the reactor in figure 1 with the modernisation method according to the present invention.

### Detailed description of one preferred embodiment

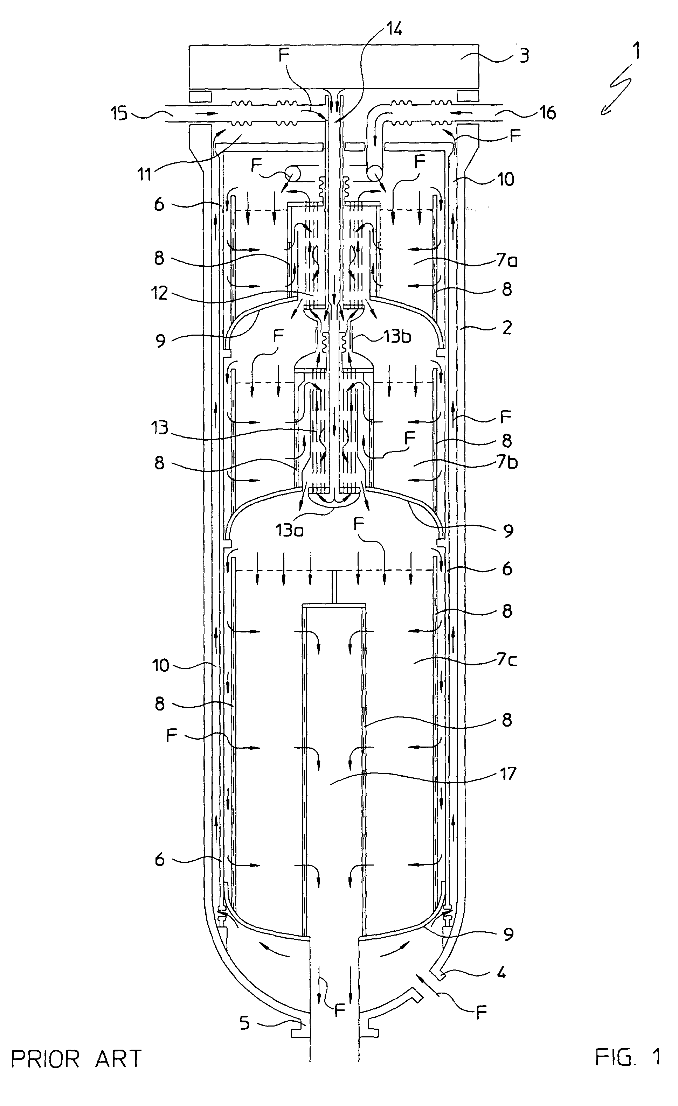

With reference to figure 1, reference sign 1 refers as a whole to a full-opening reactor according to the prior art, for carrying out exothermic heterogeneous syntheses at high pressure and temperature (50-300 bar, 300-550 °C), for example for the production of ammonia.

Reactor 1 comprises a tubular case or shell 2, which is closed on the top by a closing cover 3 having a diameter which substantially corresponds to the diameter of shell 2. The latter is provided in the lower end with respective nozzles 4 and 5 for the inlet of reactant gases and the outlet of reacted gases.

A cartridge 6, comprising - in the example of figure 1 - three catalytic beds 7a, 7b and 7c, superimposed and in reciprocal spaced relation, is supported in a known way inside shell 2.

Inside each catalytic bed 7a-7c is a conventional iron (magnetite) catalyst of small granulometry (not shown in the figure).

The catalytic beds 7a-7c are open in the upper part and are provided with gas-permeable side walls, represented by dashed lines referred to with reference sign 8, as well as with a bottom 9, which is not gas-permeable, to allow an axial-radial crossing of the gaseous reactants into the beds.

Bottom 9 of the last catalytic bed 7c also corresponds to the bottom of cartridge 6.

The dashed line shown in correspondence with the top of the catalytic beds 7a-7c delimits the upper level reached by the catalyst inside the beds, and, together with the side walls 8 and bottom 9, it defines the reaction volume of said beds.

A substantially annular space 10 is obtained between cartridge 6 and shell 2, and it extends from nozzle 4 to a collection chamber 11 of the reactant gases, which is defined between cover 3 and the upper part of cartridge 6.

Space 10, which is crossed by the cool reactant gases, has the function of protecting shell 2 from the high reaction temperatures that develop inside reactor 1 and, at the same time, it preheats the gaseous reactants.

Afterwards, the preheating of gaseous reactants is completed inside two gas-gas heat exchangers 12 and 13, which are conventionally supported inside the catalytic beds 7a and 7b, respectively.

Then, a duct 14 is provided to deliver the gaseous reactants from chamber 11 to bottom 13a of the heat exchanger 13, which is in fluid communication with the entrance of the first catalytic bed 7a through the tubes of exchangers 13 and 12.

The heat exchangers 12 and 13 are reciprocally connected in series on the tube-side, for example through a labyrinth joint 13b.

The preheating of gaseous reactants is carried out through indirect heat exchange with the hot gases leaving the catalytic beds 7a and 7b which, in turn, cool down.

On the contrary, the reaction products leaving the last catalytic bed 7c are not cooled down.

Reactor 1 further comprises ducts 15 and distributors 16, which have a toroidal shape, for the introduction of cool or "quench" reactant gases upstream of the first catalytic bed 7a for the purpose of controlling the temperature of the reaction gases.

Finally, a duct or manifold 17, which extends coaxially to the last catalytic bed 7b, is provided into reactor 1 for the extraction of the reaction products from such catalytic bed and the final discharge from reactor 1 through nozzle 5.

In figure 1, arrows F show the various paths of the gas along space 10, through beds 7a-7c and heat exchangers 12-13.

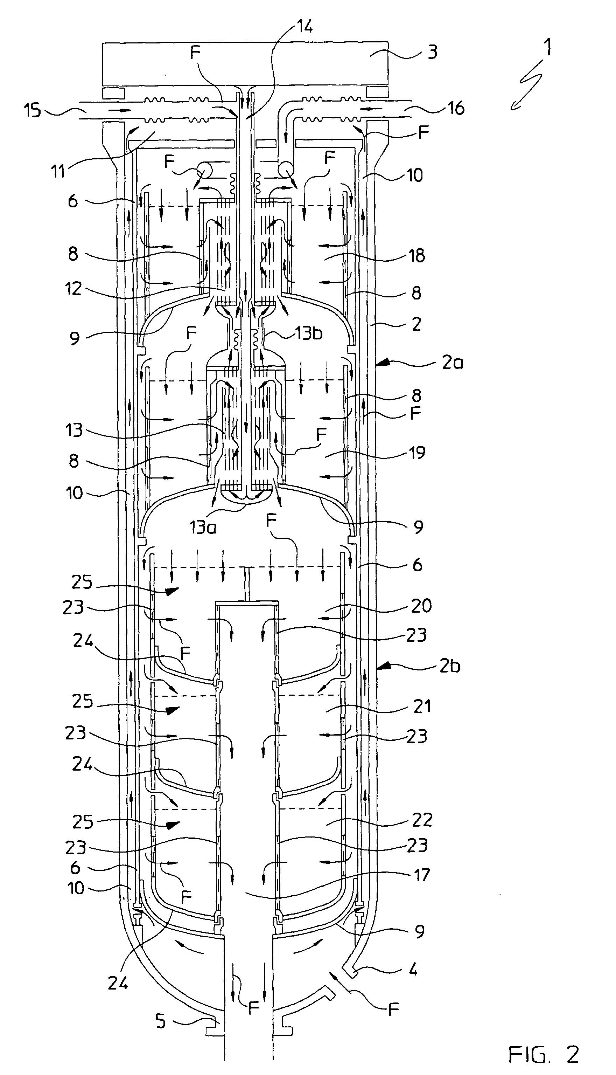

Figure 2 shows as a whole a reactor for exothermic heterogeneous synthesis obtained by modifying the reactor in figure 1 according to the method of modernization of the present invention.

In this figure, the details of reactor 1 whose structure or function is equivalent to those previously shown with reference to figure 1, will be referred to with the same reference signs and will not be described further.

The present invention is not limited to the modernization of full-opening reactors with the closing cover substantially having the same diameter as that of the shell, but it can advantageously be implemented for modernizing any type of reactor with one or more catalytic beds for the exothermic heterogeneous synthesis, and therefore, also for "in situ" modernizing reactors of the so-called Kellogg type or bottleneck type, that is, with a cover having a diameter smaller than that of the shell.

According to a preliminary step of the present method, cartridge 6 of reactor 1 is previously emptied of its content, and a first catalytic bed 18 and a second catalytic bed 19 - below the first one - are arranged inside it in an upper portion 2a of shell 2.

Catalytic beds 18 and 19 are equivalent to beds 7a and 7b of the reactor according to the prior art in figure 1.

In a further step of the present method of modernization, a plurality of catalytic beds 20-22 is advantageously provided into a lower portion 2b of shell 2, and such beds are arranged in parallel with one another.

In addition, according to the invention, a first catalyst (not shown in the figure) having predetermined activity is loaded into the first and second catalytic bed, 18 and 19 respectively, whereas a second catalyst (not shown in the figure) having a higher reaction activity with respect to that of the first catalyst loaded into the other beds, is loaded into the catalytic beds 20-22 in the lower portion 2b of shell 2.

The catalyst of the first type loaded into beds 18 and 19 is made up, for example, of a conventional iron-based catalyst of small granulometry (magnetite), whereas the catalyst of the second type loaded into the catalytic beds 20-22 advantageously is a ruthenium-based catalyst, and preferably, a catalyst based on graphite-supported ruthenium.

The reaction activity of a catalyst as the latter usually ranges between five and twenty times the activity of a conventional iron-based catalyst.

For this purpose, beds 20-22 are suitably dimensioned so as to house the high-activity catalyst without damaging it.

According to researches carried out by the applicant, it is preferable that the height of said catalytic beds does not exceed 4 metres, so that the pressure or crushing force exerted on the catalyst inside them stays within tolerable ranges. For example, particularly advantageous results have been achieved with the catalytic beds 20-22 in the lower part of the modernized reactor 1 having a height ranging between 2.5 and 3.5 metres.

Thanks to the steps of providing the lower portion of the shell with a plurality of catalytic beds, and of loading said beds with a high-activity catalyst, it is possible to obtain an increase in the conversion yield up to 130% with respect to the yield achievable with the reactor in figure 1. Moreover, savings from the point of view of operating costs and energy consumption are also obtained.

Such a yield increase, which advantageously brings to a drastic increase in the production capacity of the modernized reactor, fully justifies the investment costs necessary to carry out the method of modernization according to the present invention, in particular the expense due to the use of a catalyst having a high reaction activity, such as the ruthenium catalyst, which currently is much more expensive than the conventional low-activity catalyst.

The advantages given by the present invention are mainly referable to the fact of using a catalyst with a high reaction activity in the entire lower portion of the shell, where the speed of reaction is considerably lower than that of the upper portion, thanks to the provision in such portion of a plurality of catalytic beds suitably dimensioned and arranged in parallel with one another.

As shown in figure 2, according to a particularly advantageous embodiment of the method of the invention, an optimum distribution of the volumes of reaction and, thus, of the catalyst (both of the conventional type and of the high-activity type) is obtained by providing two catalytic beds 18 and 19 in series in the upper portion 2a of shell 2, and three catalytic beds 20-22 in parallel in the lower portion 2b.

In any case, the number of catalytic beds inside reactor 1 can be different from what shown in figure 2, according to the structural characteristics of the reactor to be modernized and to the operating conditions. For example, it is possible to provide from 2 to 5 catalytic beds into the lower portion 2b of shell 2, loaded with a catalyst having a high reaction activity.

According to a further feature of the present invention, each catalytic bed 20-22 in the lower portion 2b of shell 2 is provided with means - known per se - to obtain a radial or axial-radial flow of gas through them. Said means can, for example, comprise suitably perforated opposed gas-permeable walls 23 for the inlet and outlet of gas, and a bottom 24 which is not gas-permeable.

By doing so, the load losses caused by the flow of the reaction mixture through the catalytic beds 20-22 are advantageously reduced, thus reducing also the energy consumption and operating costs.

Means of this type for the realisation of an axial-radial gas flow inside the catalytic beds are described, for example, in the patent US 4,755,362, the description of which is herewith included as a reference.

In the case of an axial-radial flow through the catalytic beds 20-22, it is possible to obtain an optimum utilisation of the catalytic mass with high reaction activity, so that all portions of the catalyst are struck by the reaction mixture and none of them stays unused, which would cause a loss in the reaction yield and in the investment costs.

Advantageously, as pointed out in figure 2, catalytic beds 20-22 in the lower portion 2b of shell 2 comprise respective gas-permeable surfaces for the inlet of reactant gases, referred to by the external gas-permeable side walls 23. Walls 23 are in fluid communication with the second catalytic bed 19 in the upper portion 2b of shell 2. Moreover, catalytic beds 20-22 comprise respective gas-permeable surfaces for the outlet of reactant gases, referred to by the internal gas-permeable side walls 23, that are in fluid communication with manifold 17 for the outlet of gases.

Besides being extremely light and fragile, the catalyst with high reaction activity, for example of the type based on graphite-supported ruthenium, is also very sensitive to temperature.

In fact, it has been noted that, unlike conventional catalysts with low reaction activity, if the high-activity catalyst is heated at temperatures over 450 °C during the exothermic synthesis reaction, it suffers irreversible damages owing to the methanation reaction between the carbon of graphite and the hydrogen present in the reaction mixture.

For this purpose, in the example of figure 2 with axial-radial catalytic beds, it has been found that it is preferable to load the catalytic beds 20-22 in the lower portion 2b of shell 2 with the first catalyst having predetermined activity - for example, an iron-based (magnetite) catalyst - in a top part 25 of said beds, crossed by the reactant gases with a substantially axial motion, and with the second catalyst having a greater activity than that of the first catalyst - for example graphite-supported ruthenium - in the remaining part of beds 20-22 crossed by the reactant gases with a substantially radial motion.

In fact, in the upper part of the catalytic mass crossed by the reactant gases with a substantially axial motion, it is possible that the residence time of said gases together with certain operating conditions (for example, a pressure of about 200 bars or more) is enough to make the temperature rise to about 450 °C or more. This would cause irreversible damages to a catalyst with a high reaction activity, thus causing also losses in terms of the conversion yield and of the investment costs.

As a consequence, contrary to what one could expect, in some situations, the use of small layers of conventional low-activity catalyst - for example, an iron-based (magnetite) catalyst - located in the top part 25 of the catalytic beds 20-22, can be more advantageous than loading said beds only with a high-activity catalyst. This is due to the fact that the conventional catalyst is not damaged by high temperatures that may develop in the axial portion of beds 20-22, thus guaranteeing in all cases a certain conversion yield.

On the contrary, this problem is not present in the major part of the catalytic beds 20-22 that are crossed by the reaction mixture with a substantially radial motion, and therefore they are advantageously loaded with a catalyst having a high reaction activity.

In addition, thanks to the presence of these layers of conventional catalyst with low reaction activity, it is possible to protect the expensive and fragile high-activity catalyst from possible high speeds of the reactant gases entering the catalytic beds 20-22.

By way of example, the catalyst layers of the conventional type with low reaction activity located in the top part 25 of the catalytic beds 20-22 crossed by the reactant gases with a substantially axial motion can range between 5% and 30% of the total height of said beds.

The steps of the method of modernization according to the present invention can be carried out independently of the order in which they are listed in the present description and following claims, according to the particular technical requirements of implementation that may change case by case.

According to a further aspect of the present invention, a reactor for carrying out exothermic heterogeneous syntheses can be obtained by the above modernization method, or it can be advantageously manufactured as a brand new one.

To this aim, a reactor 1 comprising an external shell 2 and at least one first catalytic bed (18-19) which extends in the upper portion 2a of shell 2, is characterised in that it further comprises a plurality of catalytic beds 20-22 arranged in parallel with one another in a lower portion 2b of shell 2.

The characteristics and the advantages of the reactor obtained with the above method of modernization and described with reference to figure 2 can all be found also in the newly manufactured reactor, and therefore they will not be repeated in the following description.

Both when manufacturing it as new and when obtained by modernising a pre-existing reactor, reactor 1 shown in the example of figure 2 allows carrying out exothermic heterogeneous syntheses with high conversion yield and production capacity and with low energy consumption, according to the following process.

Gaseous reactants - such as, for example, hydrogen and nitrogen or methane and vapour - fed to reactor 1 through nozzle 4 are preheated in space 10 and in the heat exchangers 13 and 12. Then, they are fed to the first catalytic bed 18 comprising conventional catalyst, for example an iron-based (magnetite) catalyst.

The temperature of the gaseous reactants fed to the first catalytic bed 18 is controlled at the desired values by both a first portion of cool or "quench" gaseous reactants delivered to reactor 1 through distributor 16, and by a second portion of cool gaseous reactants delivered to the reactor through duct 15 and preheated in the heat exchanger 12.

Afterwards, the reaction mixture leaving catalytic bed 18, crossed with an axial-radial centripetal flow, is centrally collected and it is fed - on the shell side - to exchanger 12, where it is partly cooled due to indirect heat exchange with the flow of cool reactant gases flowing on the tube side.

The reaction mixture thus cooled is then delivered to the following catalytic bed 19, which is loaded with a conventional catalyst, for example an iron-based (magnetite) catalyst.

A second reaction mixture leaves the catalytic bed 13, crossed with a centripetal axial-radial flow. Said reaction mixture is enriched with reaction products, and it is fed - on the shell side - to exchanger 13, where it is partly cooled due to indirect heat exchange with the flow of cool reactant gases flowing on the tube side.

Advantageously, the reaction mixture thus cooled is afterwards simultaneously fed to the catalytic beds 20-22, which are arranged in parallel in the lower portion 2b of shell 2. According to the invention, the catalytic beds 20-22 are loaded with a catalyst having a high reaction activity, preferably catalyst based on graphite-supported ruthenium.

Thanks to the presence of a high-activity catalyst in the catalytic beds 20-22, it is advantageously possible to conveniently operate with comparatively low reaction temperatures, lower than those of the reaction mixture entering the previous catalytic beds 18-19, thus saving in the operation costs and in energy consumption.

Finally, the final reaction mixture emerges from the catalytic beds 20-22, crossed with a centripetal axial-radial flow. Said final reaction mixture is collected into the central manifold 17, before being definitively discharged from reactor 1 through nozzle 5.

According to a preferred embodiment, the process according to the present invention further comprises the step of making a first portion of the reaction mixture to flow into a top part 25 of the catalytic beds 20-22 in the lower portion of the shell with a substantially axial motion through a first catalyst having a predetermined activity, and a second portion of the reaction mixture through the remaining part of said beds 20-22 with a substantially radial motion through a second catalyst having a greater activity than that of the first catalyst.

The several advantages resulting from the present invention are immediately evident from what disclosed above; in particular, it is possible to considerably increase the conversion yield and the production capacity of a pre-existing reactor, decreasing at the same time both operating costs and energy consumption.

## Claims

1. Method for "in-situ" modernization of a heterogeneous exothermic synthesis reactor, including an external shell comprising a plurality of catalytic beds superimposed in a reciprocal spaced relation, said method comprising the preliminary step of:
- providing at least a first catalytic bed in an upper portion of said shell;
said at least first bed being loaded with a first catalyst having predetermined activity,
**characterised in that** it further comprises the following steps:
- providing a plurality of catalytic beds in a lower portion of the shell, arranged in parallel with one another;
- loading said catalytic beds in the lower portion of the shell with a second catalyst having a greater activity than that of the first catalyst loaded in said at least first bed.

2. Method according to claim 1, **characterised by** the fact of loading said catalytic beds in the lower portion of the shell with catalyst based on graphite-supported ruthenium.

3. Method according to claim 1, **characterised in that** it further comprises the step of:
- providing said catalytic beds in the lower portion of the shell with means to feed them with a radial or an axial-radial flow of reactant gases.

4. Method according to claim 3, **characterised by** the fact of loading said catalytic beds in the lower portion of the shell with said first catalyst having predetermined activity in a top part of the same, crossed by the reactant gases with a substantially axial motion, and with said second catalyst having a greater activity than that of the first catalyst in the remaining part of the beds crossed by the gaseous reactants with a substantially radial flow.

5. Method according to claim 1, **characterised in that** said catalytic beds in the lower portion of the shell comprise a gas-permeable surface for the inlet of reactant gases, which is in fluid communication with said at least first catalytic bed in the upper portion of the shell, and a gas-permeable surface for the outlet of reacted gases, which is in fluid communication with a gas outlet manifold.

6. Method according to claim 1, **characterised by** the fact of providing five catalytic beds, a first and a second catalytic bed into said upper portion of the shell, and a third, a fourth and a fifth catalytic bed arranged in parallel with one another in said lower portion of the shell, respectively.

7. Process for carrying out high-yield exothermic heterogeneous syntheses of the type comprising the steps of:
- feeding gaseous reactants to a synthesis reactor comprising a shell supporting a plurality of superimposed catalytic beds in a reciprocal spaced relation;
- reacting said gaseous reactants into said catalytic beds;
which is **characterised in that** it further comprises the steps of:
- feeding a reaction mixture from at least one first catalytic bed extended into an upper portion of said shell to a plurality of catalytic beds arranged in parallel with one another into a lower portion of the shell;
- flowing said reaction mixture into said catalytic beds in the lower portion of the shell through a catalyst having a greater activity of reaction with respect to the activity of the catalyst loaded in said at least first catalytic bed;
- discharging from the synthesis reactor the reaction products leaving said catalytic beds in the lower portion of the shell.

8. Process according to claim 7, **characterised in that** said reaction mixture is made to flow in said catalytic beds in the lower portion of the shell through a catalyst mass based on graphite-supported ruthenium.

9. Process according to claim 7, **characterised in that** it comprises the step of making a first portion of said reaction mixture to flow into a top part of said catalytic beds in the lower portion of the shell with a substantially axial motion through a first catalyst having a predetermined activity, and a second portion of said reaction mixture to flow through the remaining part of said beds with a substantially radial motion through a second catalyst having a greater activity than that of the first catalyst.

## Patentansprüche

1. Verfahren zur *in-situ* Modernisierung eines heterogenen, exothermen Synthesereaktors, der einschließt einen äußeren Mantel umfassend eine Vielzahl von in einem reziprok beabstandeten Verhältnis, übereinanderliegender Katalysatorbetten, wobei das Verfahren den vorbereitenden Schritt umfasst:
- Bereitstellen zumindest eines Katalysatorbetts in einem oberen Abschnitt des Mantels;
wobei das erste Bett mit einem ersten Katalysator beladen wird, der eine vorherbestimmte Aktivität besitzt,
**dadurch gekennzeichnet, dass** es weiter die folgenden Schritte umfasst:
- Bereitstellen einer Vielzahl von parallel zueinander angeordneten Katalysatorbetten in einem unteren Abschnitt des Mantels;
- Beladen der Katalysatorbetten im unteren Abschnitt des Mantels mit einem zweiten Katalysator, der eine größere Aktivität besitzt als jene des ersten Katalysators, der in das zumindest erste Bett geladenen ist.

2. Verfahren nach Anspruch 1, **dadurch gekennzeichnet, dass** die Katalysatorbetten im unteren Abschnitt des Mantels mit einem Katalysator beladen werden, der auf Graphitgestütztem Ruthenium basiert.

3. Verfahren nach Anspruch 1, **dadurch gekennzeichnet, dass** es ferner umfasst den Schritt:
- Ausstatten der Katalysatorbetten im unteren Abschnitt des Mantels mit Mitteln zum Zuführen eines radialen oder axial-radialen Stroms eines Reaktionsgases.

4. Verfahren nach Anspruch 3, **dadurch gekennzeichnet, dass** die Katalysatorbetten im unteren Abschnitt des Mantels mit dem ersten Katalysator, der eine vorherbestimmte Aktivität im oberen Teil davon besitzt, gekreuzt von den Reaktionsgasen in einer im wesentlichen axialen Bewegung, und mit dem zweiten Katalysator, der eine größere Aktivität als der erste Katalysator besitzt, im verbleibenden Teil der Betten, gekreuzt von den Reaktionsgasen in einer im wesentlichen radialen Strömung, beladen werden.

5. Verfahren nach Anspruch 1, **dadurch gekennzeichnet, dass** die Katalysatorbetten im unteren Abschnitt des Mantels eine gasdurchlässige Oberfläche für die Zuleitung der Reaktionsgase, die in Flüssigverbindung mit dem zumindest ersten Katalysatorbett im oberen Abschnitt des Mantels ist, und eine gasdurchlässige Oberfläche für den Abfluss der reagierten Gase, die in Flüssigverbindung mit einem Gasaustrittsverteiler ist, umfassen.

6. Verfahren nach Anspruch 1, **dadurch gekennzeichnet, dass** fünf Katalysatorbetten bereitgestellt werden, ein erstes und ein zweites Katalysatorbett im oberen Abschnitt des Mantels, beziehungsweise ein drittes, viertes und fünftes Katalysatorbett; parallel zueinander angeordnet, im unteren Abschnitt des Mantels.

7. Verfahren zum Durchführen hoch-ertragreicher, exothermer, heterogener Synthesen der folgenden Art, die folgende Schritte aufweist:
- Zuleiten gasförmiger Reaktianspartner zu einem Synthesereaktor umfassend einen Mantel, der eine Vielzahl von in einem reziprok beanstandeten Verhältnis, übereinanderliegender Katalysatorbetten stützt;
- Reagieren der gasförmigen Reaktionspartner in den Katalysatorbetten;
welches **dadurch gekennzeichnet ist, dass** es weiter die Schritte umfasst:
- Zuleiten einer Reaktionsmischung von zumindest einem ersten Katalysatorbett, das sich in einen oberen Abschnitt des Mantels erstreckt, zu einer Vielzahl parallel zueinander angeordneter Katalysatorbetten in einem unteren Abschnitt des Mantels;
- Strömenlassen der Reaktionsmischung in die Katalysatorbetten des unteren Abschnitts des Mantels durch einen Katalysator, der eine größere Reaktionsaktivität besitzt, bezogen auf die Aktivität des Katalysators, der in dem zumindest ersten Katalysatorbett geladen ist;
- Abziehen der Reaktionsprodukte, die die Katalysatorbetten im unteren Abschnitt des Mantels verlassen, aus dem Synthesereaktor.

8. Verfahren nach Anspruch 7, **dadurch gekennzeichnet, dass** die Reaktionsmischung in den Katalysatorbetten im unteren Abschnitt des Mantels durch eine Katalysatormasse geströmt wird, die auf Graphit-gestütztes Ruthenium basiert.

9. Verfahren nach Anspruch 7, **dadurch gekennzeichnet, dass** es umfässt den Schritt, einen ersten Teil der Reaktionsmischung in den obersten Teil der Katalysatorbetten im unteren Abschnitt des Mantels mit einer im wesentlichen axialen Bewegung durch einen ersten Katalysator mit einer vorbestimmten Aktivität strömen zu lassen, und einen zweiten Teil der Reaktionsmischung durch den verbleibenden Teil der Betten mit einer im wesentlichen radialen Bewegung durch einen zweiten Katalysator, der eine größere Aktivität als der erste Katalysator besitzt, zu strömen.

## Revendications

1. Procédé de modernisation « in situ » d'un réacteur de synthèse exothermique hétérogène composé d'une coque externe comprenant une pluralité de lits catalytiques superposés selon une relation espacée mutuelle, ledit procédé comprenant l'étape préliminaire consistant à :
- disposer au moins un premier lit catalytique dans une partie supérieure de ladite coque ;
ledit au moins premier lit étant chargé d'un premier catalyseur ayant une activité prédéterminée,
**caractérisé en ce qu'**il comprend en outre les étapes suivantes :
- disposition d'une pluralité de lits catalytiques dans une partie inférieure de la coque, disposés parallèlement les uns aux autres ;
- chargement desdits lits catalytiques de la partie inférieure de la coque d'un second catalyseur ayant une activité supérieure à celle du premier catalyseur chargé dans ledit au moins premier lit.

2. Procédé selon la revendication 1, **caractérisé par** le fait de charger lesdits lits catalytiques de la partie inférieure de la coque d'un catalyseur à base de ruthénium sur un support de graphite.

3. Procédé selon la revendication 1, **caractérisé en ce qu'**il comprend en outre l'étape consistant à :
- munir lesdits lits catalytiques de la partie inférieure de la coque de moyens destinés à les alimenter en flux radial ou en flux axial-radial de gaz réactants.

4. Procédé selon la revendication 3, **caractérisé par** le fait de charger lesdits lits catalytiques de la partie inférieure de la coque avec ledit premier catalyseur ayant une activité prédéterminés dans une partie supérieure de celui-ci, traversé par les gaz réactants selon un mouvement essentiellement axial, et avec ledit second catalyseur ayant une activité supérieure à celle du premier catalyseur dans la partie restante des lits, traversés par les réactants gazeux selon un flux essentiellement radial.

5. Procédé selon la revendication 1, **caractérisé en ce que** lesdits lits catalytiques de la partie inférieure de la coque comprennent une surface perméable aux gaz pour l'admission de gaz réactants qui est en communication fluidique avec ledit au moins premier lit catalytique de la partie supérieure de la coque, et une surface perméable aux gaz pour l'échappement des gaz ayant réagi qui est en communication fluidique avec un collecteur d'échappement de gaz.

6. Procédé selon la revendication 1, **caractérisé par** le fait de disposer cinq lits catalytiques, un premier et un second lit catalytique dans ladite partie supérieure de la coque, et un troisième, un quatrième et un cinquième lit catalytique disposés parallèlement les uns aux autres dans ladite partie inférieure de la coque, respectivement.

7. Procédé de réalisation de synthèses hétérogènes exothermiques à haut rendement du type comprenant les étapes consistant à :
- fournir des réactants gazeux à un réacteur de synthèse comprenant une coque portant une pluralité de lits catalytiques superposés selon une relation espacée mutuelle ;
- faire réagir lesdits réactants gazeux dans lesdits lits catalytiques ;
qui est **caractérisé en ce qu'**il comprend en outre les étapes consistant à :
- fournir un mélange de réaction depuis au moins un premier lit catalytique s'étendant dans une partie supérieure de ladite coque vers une pluralité de lits catalytiques disposés parallèlement les uns aux autres dans une partie inférieure de la coque ;
- faire s'écouler ledit mélange de réaction dans lesdits lits catalytiques dans la partie inférieure de la coque à travers un catalyseur ayant une activité de réaction supérieure à l'activité du catalyseur chargé dans ledit au moins premier lit catalytique ;
- évacuer du réacteur de synthèse les produits de réaction quittant lesdits lits catalytiques de la partie inférieure de la coque.

8. Procédé selon la revendication 7, **caractérisé en ce que** l'écoulement dudit mélange de réaction a lieu dans lesdits lits catalytiques de la partie inférieure de la coque à travers une masse de catalyseur à base de ruthénium sur un support de graphite.

9. Procédé selon la revendication 7, **caractérisé en ce qu'**il comprend l'étape consistant à faire écouler une première partie dudit mélange de réaction dans une partie supérieure desdits lits catalytiques de la partie inférieure de la coque avec un mouvement essentiellement axial à travers un premier catalyseur ayant une activité prédéterminée, et à faire écouler une seconde partie dudit mélange de réaction à travers la partie restante desdits lits avec un mouvement essentiellement radial à travers un second catalyseur ayant une activité supérieure à celle du premier catalyseur.
